# EUROPÄISCHE PATENTANMELDUNG

(11) **EP 2 253 940 A2**
(43) Veröffentlichungstag der Anmeldung: **24.11.2010**
(21) Anmeldenummer: 10004956.8
(22) Anmeldetag: 11.05.2010
(51) Int. Cl.: G01D 11/24

(54) **Optischer Sensor**

(30) Priorität: 20.05.2009 DE 102009022218
(71) Anmelder: Leuze electronic GmbH + Co. KG, 73277 Owen/Teck (DE)
(72) Erfinder: Deutschmann, Martin, 73730 Esslingen (DE)
(74) Vertreter: Ruckh, Rainer Gerhard

(57) **Zusammenfassung**

Die Erfindung betrifft einen optischen Sensor mit wenigstens einem Gehäuse (2) zur Aufnahme von Sensorkomponenten. In einer Wand des Gehäuses (2) ist ein Stecker (9) gelagert. Der Stecker (9) ist mit einem an der Innenseite der Wand des Gehäuses (2) angeordneten Verriegelungselement unter Bildung einer Rastverbindung gegen ein Herauslösen aus dem Gehäuse (2) gesichert. Der Stecker (9) ist in wenigstens zwei unterschiedlichen Endlagen durch das Verriegelungselement lagefixierbar.

## Beschreibung

Die Erfindung betrifft einen optischen Sensor gemäß dem Oberbegriff des Anspruchs 1.

Derartige optische Sensoren können beispielsweise als Lichtschranken, Lichttaster oder Distanzsensoren ausgebildet sein. Generell erfolgt mit einem optischen Sensor eine Überwachung vorgegebener Bereiche, wobei in dem optischen Sensor in Abhängigkeit davon ob ein Objekt in den Bereich eindringt oder nicht, ein geeignetes Objektfeststellungssignal generiert wird. Zur Ausgabe des Objektfeststellungssignals, zur Eingabe von Daten wie Parameterwerten in den optischen Sensor und zum Anschluss an eine Versorgungsspannung, weist der optische Sensor einen Stecker auf, der an einem Gehäuse angebracht, das zur Aufnahme von Sensorkomponenten dient.

Üblicherweise ist der Stecker durch Befestigungsmittel fest und unlösbar mit dem Gehäuse verbunden, so dass der Stecker in einer fest vorgegebenen Orientierung von einer Wand des Gehäuses nach außen hervorsteht. Abhängig von den Applikationen, in welcher der optische Sensor eingesetzt wird, kann es wünschenswert sein, dass der Stecker an verschiedenen Wänden beziehungsweise Seiten des Gehäuses ausmündet. Bei einer Applikation in einer Maschine kann es infolge eines engbegrenzten Einbauraums erforderlich sein, dass der Stecker an einer bestimmten Seitenfläche des Gehäuses ausmündet. Bei einer anderen Applikation, beispielsweise bei der Anbindung des optischen Sensors an einer Förderanlage, kann es wünschenswert sein, dass der Stecker an der Unterseite des Gehäuses ausmündet. Ist jedoch der Stecker fest ins Gehäuse eingebaut, so müssen zur Realisierung verschiedener Orientierungen des Steckers vom Gehäuse komplett unterschiedliche Gehäusekonstruktionen und damit unterschiedliche Varianten des optischen Sensors vorgesehen werden, was dessen Herstellkosten in unerwünschter Weise erhöht.

Der Erfindung liegt die Aufgabe einen optischen Sensor der eingangsgenannten Art bereitzustellen, welcher bei einfachem Aufbau eine erhöhte Funktionalität aufweist.

Zur Lösung dieser Aufgabe sind die Merkmale des Anspruchs 1 vorgesehen. Vorteilhafte Ausführungsformen sind zweckmäßige Weiterbildungen der Erfindung sind in dem Unteransprüchen beschrieben.

Die Erfindung betrifft einen optischen Sensor mit wenigstens einem Gehäuse zur Aufnahme von Sensorkomponenten. In einer Wand des Gehäuses ist ein Stecker gelagert. Der Stecker ist mit einem an der Innenseite der Wand des Gehäuses angeordneten Verriegelungselement unter Bildung einer Rastverbindung gegen ein Herauslösen aus dem Gehäuse gesichert. Der Stecker ist in wenigstens zwei unterschiedlichen Endlagen durch das Verriegelungselement lagefixierbar.

Durch den Einsatz des erfindungsgemäßen Verriegelungselements kann ein Stecker in unterschiedlichen Orientierungen am Gehäuse eines optischen Sensors vorgesehen sein. Dies bedeutet, dass mit dem optischen Sensor unterschiedliche Steckervarianten realisierbar sind. Wesentlich hierbei ist, dass das Verriegelungselement ein Verrasten des Steckers in mehreren, unterschiedlichen Endlagen erlaubt. Dadurch können die unterschiedlichen Steckervarianten ohne konstruktive Änderungen des optischen Sensors realisiert werden. Dadurch, dass der Stecker mit dem Verriegelungselement reversibel lösbar lagefixierbar ist, können unterschiedliche Steckervarianten durch einfaches Umstecken mittels des Verriegelungselements realisiert werden. Die unterschiedlichen Steckervarianten können so während der Endmontage des optischen Sensors einfach und schnell vorgegeben werden.

In einer vorteilhaften Ausführungsform der Erfindung, ist der Stecker in zwei um 180° zueinander gedrehten Endlagen mittels des Verriegelungselements lagefixierbar.

Damit können beispielsweise zwei Varianten des optischen Sensors realisiert werden, bei welchen der Stecker entweder zur Unterseite oder zu einer Seitenfläche des optischen Sensors hinausmündet. Die Steckeraufnahme befindet sich in diesem Fall an einem abgeschrägten Wandsegment zwischen der Unterseite und Seitenfläche des Gehäuses des optischen Sensors.

Besonders vorteilhaft ist, dass das Verriegelungselement von einem Klemmbügel gebildet ist mit zwei elastischen, gegeneinander aufspreizbaren Schenkeln. Diese bilden Rastmittel zur Verrastung des Steckers in den Endlagen. Beide Schenkel des Klemmbügels verlaufen parallel im Abstand zueinander. In dem Zwischenraum zwischen den Schenkeln, ist ein Segment des Steckers einklemmbar. Das Segment wird von einem Ansatz gebildet, der einen nicht rotationssymmetrischen Querschnitt aufweist. Der Ansatz weist eine Drehsymmetrie bezüglich diskreter Drehwinkel auf welche die Endlagen des Steckers definieren.

Durch die spezifische Geometrie des Ansatzes können die einzelnen Endpositionen des Steckers am Gehäuse sehr einfach sind exakt vorgegeben werden.

Die Fixierung des Steckers in den einzelnen Endlagen kann mit dem Klemmbügel sehr einfach und schnell erfolgen. Wesentlich hierbei ist, dass die Geometrien des Klemmbügels und des Ansatzes so aufeinander abgestimmt sind, dass mit dem Klemmbügel durch den selben Klemmvorgang mit dem Ansatz in den verschiedenen Drehwinkeln der Stecker in den unterschiedlichen Endpositionen auf dieselbe Weise lagefixierbar ist. Weiterhin ist vorteilhaft, dass durch einfaches Aufspreizen der Schenkel des Klemmbügels der Stecker zwischen den Endlagen gedreht werden kann, wodurch ein Wechsel der Endlagen-Varianten einfach und schnell bewerkstelligt werden kann.

Besonders vorteilhaft, mündet der Ansatz an einem Steckerteil des Steckers aus. Am freien Ende des Ansatzes schließt ein Ring an mit einem größeren Querschnitt als der Querschnitt des Ansatzes. Der Klemmbügel wird dann zwischen der Innenseite der Wand des Gehäuses und dem Ring des Ansatzes spielfrei gehalten.

Vorteilhaft hierbei ist, dass außer dem Klemmbügel kein weiteres Befestigungselement notwendig ist um einen festen Sitz des Steckers zu erzielen.

Insbesondere ist vorteilhaft dass der Klemmbügel durch variable Ausbildungen dessen Wandstärke einen Spielausgleich aufweist, in dem sich die Wandstärken kontinuierlich zum Zwischenraum des Klemmbügels vergrößern.

Damit wird auf konstruktiv einfache Weise ein spielfreier Sitz des Steckers im Gehäuse erzielt.

In einer vorteilhaften Ausgestaltung der Erfindung ist der Ansatz mit dem Rand durch eine Öffnung in der Wand des Gehäuses einführbar wobei der Durchmesser der Öffnung größer ist, als der Querschnitt des Rings. Diese Öffnung ist durch einen auf den Ansatz aufsetzbaren O-Ring abdichtbar. Die Abdichtung der Öffnung des Gehäuses ist dadurch sehr einfach und kostengünstig realisiert.

Die Erfindung wird im Folgenden anhand der Zeichnungen erläutert. Es zeigen:
- Figur: 1: Schematische Darstellung eines Gehäuses eines optischen Sen- sors mit einem Stecker.
- Figur: 2: Darstellung eines Ausschnitts des Gehäuses mit einem in zwei unterschiedlichen Endlagen angeordneten Stecker.
- Figur: 3: Draufsicht auf ein Segment der Wand des Gehäuses gemäß Fi- guren 1 und 2.
- Figur 4:: Querschnitt in der Anordnung von Figur 3 einer Ebene parallel zur Ebene der Gehäusewand.
- Figur 5:: Längsschnitt durch die Anordnung gemäß Figur 4.

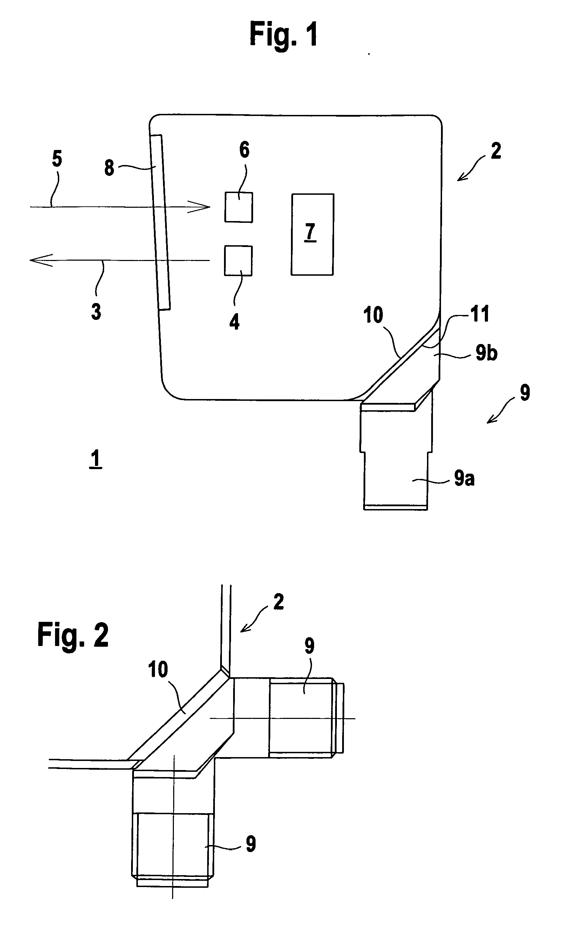

Figur 1 zeigt schematisch einen optischen Sensor 1, der zur Erfassung von nicht dargestellten Objekten in einem Überwachungsbereich dient. Der optische Sensor 1 ist im vorliegenden Fall als Lichttaster ausgebildet und weist ein Gehäuse 2 auf, in welchem sämtliche Sensorkomponenten integriert sind. Als Sensorkomponenten sind insbesondere ein Sendelichtstrahlen 3 emittierender Sender 4, ein Empfangslichtstrahlen 5 empfangender Empfänger 6 und eine Auswerteeinheit 7 in Form eines Mikroprozessors oder dergleichen vorgesehen. Zur Detektion von Objekten in einem Überwachungsbereich werden die vom Sender 4 emittierten Sendelichtstrahlen 3 durch ein Fenster 8 in der Frontwand des Gehäuses 2 in den Überwachungsbereich geführt. Von einem Objekt werden die Sendelichtstrahlen 3 als Empfangslichtstrahlen 5 zurückreflektiert und durch das Fenster 8 zum Empfänger 6 geführt. In der Auswerteeinheit 7 wird in Abhängigkeit der Empfangssignale des Empfängers 6 ein binäres Objektfeststellungssignal generiert, dessen Schaltzustände angeben, ob sich ein Objekt im Überwachungsbereich befindet oder nicht.

Zur Ausgabe des Objektfeststellungssignals, zur Dateneingabe in den optischen Sensor 1 und zur Spannungsversorgung des optischen Sensors 1 ist am Gehäuse 2 ein Stecker 9 vorgesehen. Der Stecker 9 ist an einem Wandsegment 10 befestigt, das schräg verlaufend zwischen der Rückwand und dem Boden des Gehäuses 2 angeordnet ist.

Der Stecker 9 ist, wie aus Figur 2 ersichtlich als Drehstecker 9 derart ausgebildet, dass er wahlweise in den beiden in Figur 2 dargestellten Endlagen am Gehäuse 2 befestigt werden kann. In der ersten Endlage zeigt die Längsachse nach unten, dass heißt der Stecker 9 steht nach unten über dem Boden des Gehäuses 2 hervor. In der zweiten Endlage verläuft die Längsachse in horizontaler Richtung, so dass der Stecker 9 über die Rückwand des Gehäuses 2 hervorsteht. Durch die unterschiedlichen Montagepositionen des Steckers 9 kann der optische Sensor 1 in verschiedenen Einbausituationen installiert werden.

Der Stecker 9 weist, wie aus Figur 2 ersichtlich einen im wesentlichen zylindrischen Steckerkörper 9a auf, an den ein Steckerteil 9b anschließt, das eine Schrägfläche 11 zur Anlage an das Wandsegment 10 des Gehäuses 2 aufweist. Je nach Orientierung der Schrägfläche 11 befindet sich der Stecker 9 in der ersten oder zweiten Endlage.

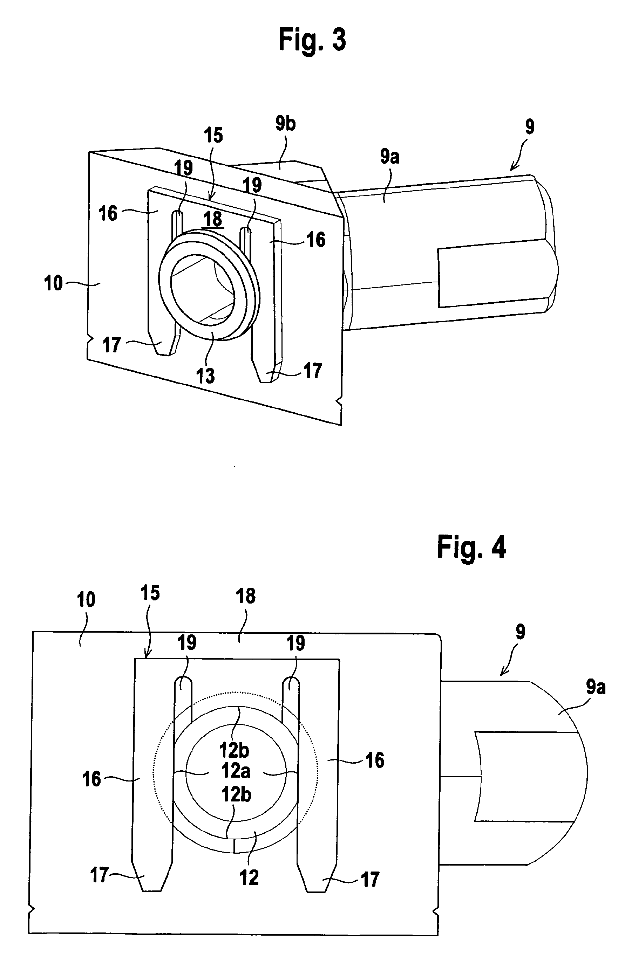

Die Figuren 3 bis 5 zeigen das Wandsegment 10, den daran gelagerten Stecker 9 sowie die Komponenten, die zur Befestigung des Steckers 9 am Wandsegment 10 in der jeweiligen Endlage dienen.

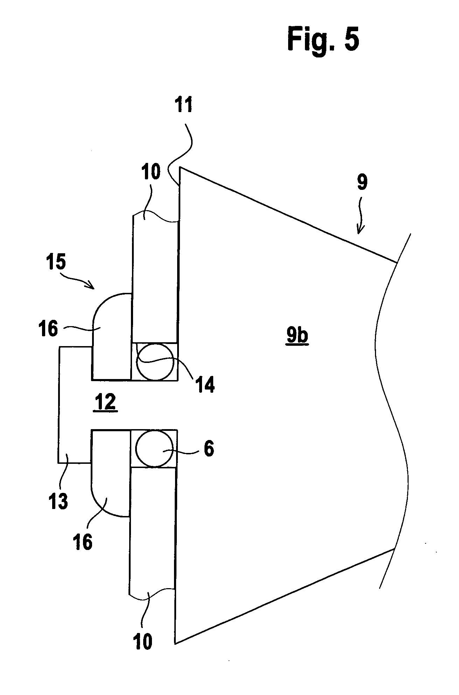

Wie aus Figur 5 ersichtlich mündet an der Schrägfläche 11 des Steckerteils 9b ein zylindrischer, vorzugsweise hohlzylindrischer Ansatz 12 aus, an dessen freiem Ende ein Ring 13 vorgesehen ist.

Während der Ring 13 eine kreisförmige Mantelfläche aufweist, weist der Ring 13 keinen rotationssymmetrischen Querschnitt auf. Vielmehr weist, wie die Querschnittsdarstellung von Figur 4 zeigt, die Querschnittsfläche des Ansatzes 12 zwei parallel zueinander geradlinig verlaufende Segmente 12a auf, die durch Kreissegmente 12b verbunden sind. Damit ist der Querschnitt des Ansatzes 12 nur bezüglich einer diskreten Drehung um 180° drehsymmetrisch.

Wie aus Figur 5 ersichtlich, kann der Ansatz 12 mit dem Ring 13 zur Montage des Steckers 9 am Gehäuse 2 durch eine Öffnung 14 im Gehäuse 2 in den Innenraum des Gehäuses 2 eingeschoben werden. Der kreisförmige Querschnitt der Öffnung 14 ist geringfügig größer als der ebenfalls kreisförmige Querschnitt des Rings 13, so dass dieser durch die Öffnung 14 geschoben werden kann.

Zur Fixierung des Steckers 9 am Wandsegment 10, wird lediglich bei in die Öffnung 14 eingeschobenem Ansatz 12 ein Klemmbügel 15 auf den über die Öffnung 14 des Wandsegments 10 in den Innenraum des Gehäuses 2 ragenden Teil des Ansatzes 12 aufgerastet.

Der ein Verriegelungselement bildende Klemmbügel 15 ist als Kunststoffteil ausgebildet. Der Klemmbügel 15 weist zwei identisch ausgebildete parallel in Abstand zueinander verlaufende Schenkel 16 auf, die an ihren freien Enden sich verjüngende Spitzen 17 aufweisen. Zwischen den geradlinig verlaufenden Innenseiten der Schenkel 16 ist ein Zwischenraum gebildet. Die Schenkel 16 münden an einem Steg 18 des Klemmbügels 15 aus, der so die Schenkel 16 verbindet. In dem Steg 18 sind zwei jeweils an einen Schenkel 16 angrenzende Aussparungen 19 vorgesehen. Diese Aussparungen 19 bilden Schwächungsstrukturen, wodurch die Schenkel 16 gegeneinander aufgebogen und aufgespreizt werden können.

Bei der Montage wird der Klemmbügel 15 auf den in den Innenraum des Gehäuses 2 ragenden Teils des durch die Bohrung geführten Ansatzes 12 aufgerastet. Das Aufrasten wird durch die Spitzen 17 der Schenkel 16 erleichtert. Dabei liegen die Innenseiten der Schenkel 16, wie in Figur 4 dargestellt, dicht an den geradlinig verlaufenden Segmenten 12a des Ansatzes 12 an. Da der Querschnitt des Ansatzes 12 drehsymmetrisch um eine Drehung von 180° ist, gilt dies für beide Endlagen des Steckers 9 am Gehäuse 2. Durch die Geometrie des Querschnitts des Ansatzes 12 und die daran angepasste Ausbildung der Geometrie des Klemmbügels 15 werden somit die beiden Endlagen des Steckers 9 am Gehäuse 2 vorgegeben.

Der Klemmbügel 15 bildet nicht nur eine drehsichere Befestigung des Steckers 9 am Gehäuse 2, er sorgt zugleich dafür, dass der Stecker 9 spielfrei und fest am Wandsegment 10 des Gehäuses 2 anliegt. Hierzu sind die Länge des Ansatzes 12, die Wandstärke des Klemmbügels 15 sowie die Wandstärke des Wandsegments 10 des Gehäuses 2 so aufeinander abgestimmt, dass dann, wenn der Ansatz 12 voll in die Öffnung 14 des Wandsegments 10 eingeschoben ist bis die Schrägfläche 11 des Steckerteils 9b dicht am Wandsegment 10 anliegt, der Abstand zwischen Ring 13 und Innenseite des Wandsegments 10 des Gehäuses 2 gerade der Wandstärke des Klemmbügels 15 entspricht, so dass durch das Aufrasten des Klemmbügels 15 auf den Ansatz 12 dessen Klemmbügel 15 spielfrei zwischen Ring 13 und Wandsegment 10 eingeklemmt ist, wodurch ein Stecker 9 spielfrei am Gehäuse 2 gelagert ist.

Figur 4 zeigt dabei die Drehsicherung des Steckers 9, die dadurch erreicht wird, dass die Schenkel 16 des Klemmbügels 15 dicht an den Segmenten 12a des Klemmbügels 15 anliegen. Die Figuren 3 und 5 zeigen die spielfreie Lagersicherung des Steckers 9 am Gehäuse 2 dadurch, dass der Klemmbügel 15 spielfrei zwischen dem Ring 13 und dem Wandsegment 10 eingeklemmt ist. Um für die Funktion des Einklemmens einen Spielausgleich zu erhalten, sind die Wandstärken der Schenkel 16, wie auf Figur 5 ersichtlich, nicht gleichförmig ausgebildet, sondern nehmen zu ihren Innenseiten, welche den Zwischenraum zwischen den Schenkeln 16 begrenzen, kontinuierlich zu.

Zur Abdichtung der Öffnung 14 im Wandsegment 10 wird, wie in Figur 5 dargestellt, auf den Ansatz 12 ein O- Ring 13 aufgerastet, so dass dieser den Zwischenraum zwischen dem Wandsegment 10 und dem Ansatz 12 in der Öffnung 14 ausfüllt und abdichtet.

Figur 4 zeigt, wie die Schenkel 16 des Klemmbügels 15 durch Anlage an den Segmenten 12b des Ansatzes 12 den Stecker 9 in einer Endlage fixieren. Um den Stecker 9 in die zweite Endlage zu bringen müssen die Schenkel 16 des Klemmbügels 15 aufgespreizt werden. Dann kann der Stecker 9 gedreht werden, so dass der Ansatz 12 um 180° gedreht wird. Danach wird der Klemmbügel 15 wieder am Anschlag fixiert, so dass die neue Endlage des Steckers 9 lagefixiert ist.

### Bezugszeichenliste

- (1): Optischer Sensor
- (2): Gehäuse
- (3): Sendelichtstrahlen
- (4): Sender
- (5): Empfangslichtstrahlen
- (6): Empfänger
- (7): Auswerteeinheit
- (8): Fenster
- (9): Stecker
- (9a): Steckerkörper
- (9b): Steckerteil
- (10): Wandsegment
- (11): Schrägfläche
- (12): Ansatz
- (12a): Segmente
- (12b): Kreissegmente
- (13): Ring
- (14): Öffnung
- (15): Klemmbügel
- (16): Schenkel
- (17): Spitzen
- (18): Steg
- (19): Aussparungen

## Patentansprüche

1. Optischer Sensor (1) mit wenigstens einem Gehäuse (2) zur Aufnahme von Sensorkomponenten, wobei in einer Wand des Gehäuses (2) ein Stecker (9) gelagert ist, **dadurch gekennzeichnet, dass** der Stecker (9) mit einem an der Innenseite der Wand des Gehäuses (2) angeordneten Verriegelungselement unter Bildung einer Rastverbindung gegen ein Herauslösen aus dem Gehäuse (2) gesichert ist, wobei der Stecker (9) in wenigstens zwei unterschiedlichen Endlagen durch das Verriegelungselement lagefixierbar ist.

2. Optischer Sensor (1) nach Anspruch 1, **dadurch gekennzeichnet, dass** der Stecker (9) in zwei um 180° zueinander gedrehten Endlagen mittels des Verriegelungselements lagefixierbar ist.

3. Optischer Sensor (1) nach einem der Ansprüche 1 oder 2, **dadurch gekennzeichnet, dass** das Verriegelungselement von einem Klemmbügel (15) mit zwei elastischen, gegeneinander aufspreizbaren Schenkeln (16), welche Rastmittel zur Verrastung des Steckers (9) in den Endlagen bilden, gebildet ist.

4. Optischer Sensor (1) nach Anspruch 3, **dadurch gekennzeichnet, dass** die Schenkel (16) des Klemmbügels (15) parallel in Abstand zueinander verlaufen, wobei in dem Zwischenraum zwischen den Schenkeln (16) ein Segment des Steckers (9) einklemmbar ist.

5. Optischer Sensor (1) nach Anspruch 4, **dadurch gekennzeichnet, dass** das Segment des Steckers (9) von einem Ansatz (12) gebildet, welcher einen nicht rotationssymmetrischen Querschnitt aufweist.

6. Optischer Sensor (1) nach Anspruch 5, **dadurch gekennzeichnet, dass** der Ansatz (12) eine Drehsymmetrie bezüglich diskreter Drehwinkel aufweist, welche die Endlagen des Steckers (9) definieren.

7. Optischer Sensor (1) nach Anspruch 6, **dadurch gekennzeichnet, dass** die Schenkel (16) des Verriegelungselements gegeneinander aufspreizbar sind, wodurch der Stecker (9) zwischen den Endlagen gedreht werden kann.

8. Optischer Sensor (1) nach Ansprüchen 5 bis 7, **dadurch gekennzeichnet, dass** der Ansatz (12) an einem Steckerteil (9b) des Steckers (9) ausmündet, und dass am freien Ende des Ansatzes (12) ein Ring (13) anschließt, dessen Querschnitt größer ist als der Querschnitt des Ansatzes (12).

9. Optischer Sensor (1) nach Anspruch 8, **dadurch gekennzeichnet, dass** der Klemmbügel (15) zwischen der Innenseite der Wand des Gehäuses (2) und dem Ring (13) des Ansatzes (12) spielfrei gehalten ist.

10. Optischer Sensor (1) nach Anspruch 9, **dadurch gekennzeichnet, dass** der Klemmbügel (15) einen Spielausgleich derart aufweist, dass sich die Wandstärken der Klemmbügel (15) zum Zwischenraum hin kontinuierlich vergrößern.

11. Optischer Sensor (1) nach Ansprüchen 8 bis 10, **dadurch gekennzeichnet, dass** der Ansatz (12) mit dem Ring (13) durch eine Öffnung (14) in der Wand des Gehäuses (2) einführbar ist, wobei der Durchmesser der Öffnung (14) größer ist als der Querschnitt des Rings (13).

12. Optischer Sensor (1) nach Anspruch 11, **dadurch gekennzeichnet, dass** die Öffnung (14) durch einen auf den Ansatz (12) aufsetzbaren O-Ring (13) abdichtbar ist.
